# EUROPEAN PATENT APPLICATION

(11) **EP 1 965 564 A1**
(43) Date of publication of application: **03.09.2008**
(21) Application number: 08101543.0
(22) Date of filing: 12.02.2008
(51) Int. Cl.: H04L 29/06

(54) **Content reproduction in telecommunications systems**

(30) Priority: 13.02.2007 GB 0702789
(71) Applicant: Vodafone Group PLC, Newbury Berkshire RG14 2FN (GB)
(72) Inventor: Ashbrook, David, Newbury, Berkshire RG14 2FN (GB); Pollington, David, Newbury, Berkshire RG14 2FN (GB); Holmes, Neil, Newbury, Berkshire RG14 2FN (GB)
(74) Representative: Keston, David Arthur

(57) **Abstract**

A telecommunications system is disclosed which includes a content server 30 for distributing content and a device 1 for receiving this content during a communication session and for reproducing this content. The device 1 is operable during the communication session to transmit to the content server an indication of a quality of the received content required by the device 1. The content server 30, in response to this indication, adjusts the content that is transmitted thereafter to the device 1. For example, this indication of a quality could be an indication that only audio or only video content should be transmitted to the terminal, or an indication of the quality with which video and/audio content should be transmitted to the terminal. Indication may be generated by the device 1 automatically in response to the conditions in which the device 1 is being used, or may be manually selected by the user of the device 1.

## Description

The present invention relates to a telecommunications system including a. server for distributing content and a device for receiving the content during a communication session and for reproducing the content. The invention also relates to a telecommunications device, a server and a method of distributing content.

Transmission of particular types of content, such as video, tends to use a large amount of telecommunications network resources because of the bandwidth required to transmit video content at an acceptable quality. When the device is a mobile device, which communicates vdre1essly with a telecommunications network, this high use of telecommunications network resources tends to be costly and problematical.

Reproducing particular types of content on a mobile device, such as video, tends to consume a large amount of power to allow the device to perform the decoding, transcoding and rendering of the video content, utilising the device's memory, CPU, speakers, and display (with associated drivers). When the device is a battery operated portable device, this high power consumption can vastly reduce the device's operational run time,

it has been observed that some users of devices will operate their devices to receive high telecommunications network resource-consuming and high power-consuming content but do not in fact need the fun high quality content being delivered to them as standard within a video and audio stream. For example, for a user consuming content that comprises both audio and video whilst on the move that the user may periodically be unable to view the video content, for example when the user is walking, getting on and off public transport etc.

The reproduction of content that is not observed by the user is wasteful of mobile device power. Further, the transmission of content, the reproduction of which is not observed by the user, is wasteful of telecommunication resources.

In one aspect, the present invention provides a telecommunications system including a server for distributing content, and a device for receiving said content during a communication session and for reproducing said content, wherein the device is operable during a said communication session to transmit to said server an indication of a quality of said received content required by the device.

In the embodiments, the device consumes (reproduces) the content during the communication session. The content may be streamed to the device. Typically, the content will be consumed (reproduced) as it is received by the device for example, in near real time.

The quality required by the device (or its user) may be monitored continuously during the communication session. The device may be operable, to transmit the indication of the required quality at any time during the communication session.

The indication of the quality of the content may be an indication of the quality in the sense of the kind or type of content, Additionally, or alternatively, the indication of quality may be an indication of quality in the sense of the fidelity of the received content to the original content source typically determined by the encoding used and the transmission rate.

The content kinds or types may, for example, be video and audio content types. In this specification, "video" refers to visual content, which does not include audio content.

The quality may be selected by a user of the device, for example, using the user interface of the device, In this arrangement, the user may manually select the quality of respective parts of the content that are required. For example, the user may have a preference for video and/or audio content, and/or may have a preference for high quality audio reproduction but may be less concerned as to the quality of the video reproduction. Accordingly, the user will operate the user interface of the device to input these preferences, which are transmitted to the server. The server then selects or modifies the content transmitted to the device subsequently during the communication session so that it has the preferred audio and video characteristics. Thus, the quality of different aspects (type and or fidelity) of the content can be tailored to a particular user's preferences.

In another arrangement, the quality is selected (automatically) by the device. The quality may be selected automatically in response to a stimulus. The stimulus may be user manipulation of the device - for example to obscure the display (such as when a "clamshell" mobile terminal is closed). Alternatively, the stimulus may be an environmental stimulus. The stimulus may be the detected proximity of the device to a user, or the change in light level - for example, as detected by a photometric or photoelectric sensor on the device, both of which might be in response to the device being stored in a user's pocket or bag.

The device may be a mobile or cellular telecommunications device. The content may be transmitted to the device by a mobile or cellular telecommunications network, such as a GSM or UMTS mobile or cellular telecommunications network.

The content may also be transmitted to the terminal by another means, such as WLAN.

The content may be transmitted by internet protocol (IP). The device may be a fixed device.

The present invention also provides a telecommunications device, a server and a method of distributing content as claimed in the independent claims,

For a better understanding of the present invention, an embodiment will now be described by way of example with reference to the accompanying drawings, in which:
Figure 1 shows schematically the elements of a communications network, including a cellular or mobile telecommunications network;
Figure 2 shows schematically a content server according to a first embodiment of the invention for transmitting content to s device via the mobile network:
Figures 3A,3B,3C and 3D show different content configurations that may be generated by the content server;
Figure 4 shows a detailed view of a device for use with the mobile telecommunications network; and
Figure 5 shows schematically a content server according to a second embodiment of the invention.

In the figures like elements are generally designated with the same reference Sign.

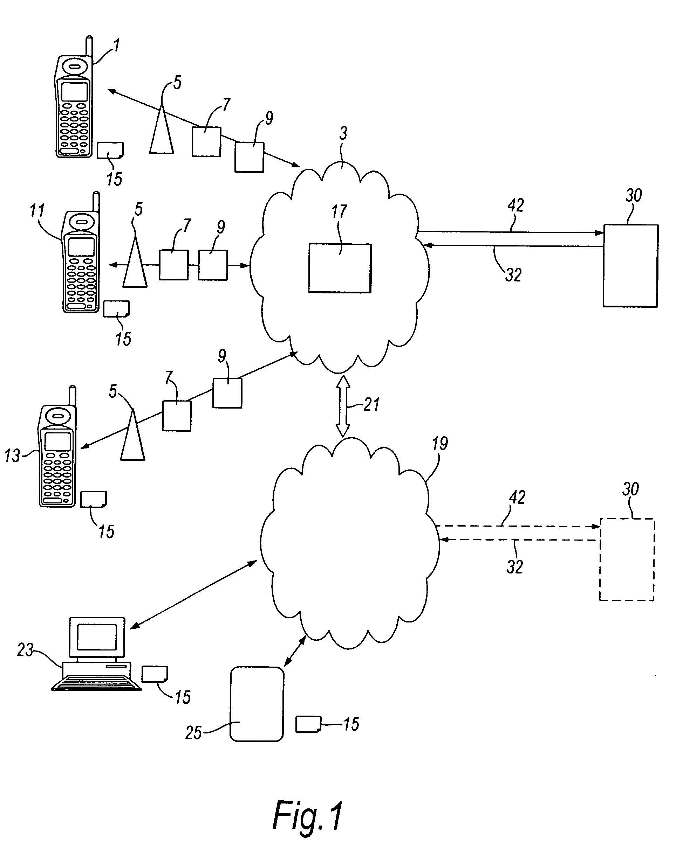

Figure 1 shows schematically a network in which the invention may be used. The figure shows a mobile or cellular telecommunications network. However, it should be appreciated that the invention is applicable to any type of network, although it is particularly applicable to a network where at least some of the devices communicate using mobile telecommunications/wireless data transmission. Mobile terminal 1 is registered with GSN.t/GPRS or UNITS (3G) mobile telecommunications network 3. The mobile terminal 1 may be a handheld, mobile telephone, a personal digital assistant (PDA) or a laptop computer equipped with a datacard. The mobile terminal I communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal ! 1 and the mobile telecommunications network 3 are routed from the radio access network via GPRS support nodes (SGSN) 9, which may be connected by a fixed (cable) link to the mobile telecommunications network 3. Other delivery mechanisms are possible - e.g. in audio and video are sent as separate streams; in fact, the audio and video control streams are also sent as separate streams (1 "video" stream consists of 4 other streams).

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5,RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1,1 and 13 is provided with a respective subscriber identity module (SIM) 15. During the manufacturing process of each SIM, authentication information is stored thereon under the control of the .mobile telecommunications network 3. The mobile telecommunications network 3 itself stores details of each of the SIMs issued under its control. In operation of the mobile telecommunications network 3, a terminal 1, 11) 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the terminal 1,11,13. Using information pre-stored concerning the content of the relevant SIM 15, the authentication processor calculates the expected value of the reply from the mobile terminal 1,11,13. If the reply received matches the expected calculated reply, the SIM 15 and the associated mobile terminal are considered to be authenticated,

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential, For example, the terminal may communicate with the network via the fixed telephone network (PSTN), via a UMA "access point" and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

It should be noted that the authentication process being described does not necessarily authenticate the human identity of the user. For example, mobile telecommunication networks have pre-pay subscribers who are issued with SIMs in return for pre-payment, enabling them to use network services. However, the identity of such pro-pay subscribers may not be known by the network. Nevertheless, such a user cannot make use of the network until the network has authenticated the user's SIM - that is, has confirmed that such user is a particular user who has a particular pre-paid account with a network.

The network shown in Figure 1 comprises both the mobile telecommunications network 3 and the Internet 19 (which itself comprises a multiplicity of other networks) or other IP network.

In accordance with the embodiment of the invention, a content server 30 is operable to provide content to terminals 1,11,13,23,25 registered with the telecommunications network 3. The content server 30 may be connected for supplying content directly to the telecommunications network 3 or may be connected for supplying content to the internet 19, from where that content is provided to the telecommunications network 3 via link 21. The content server 30 is connected to the telecommunications network 3 or internet 19 via link 32.

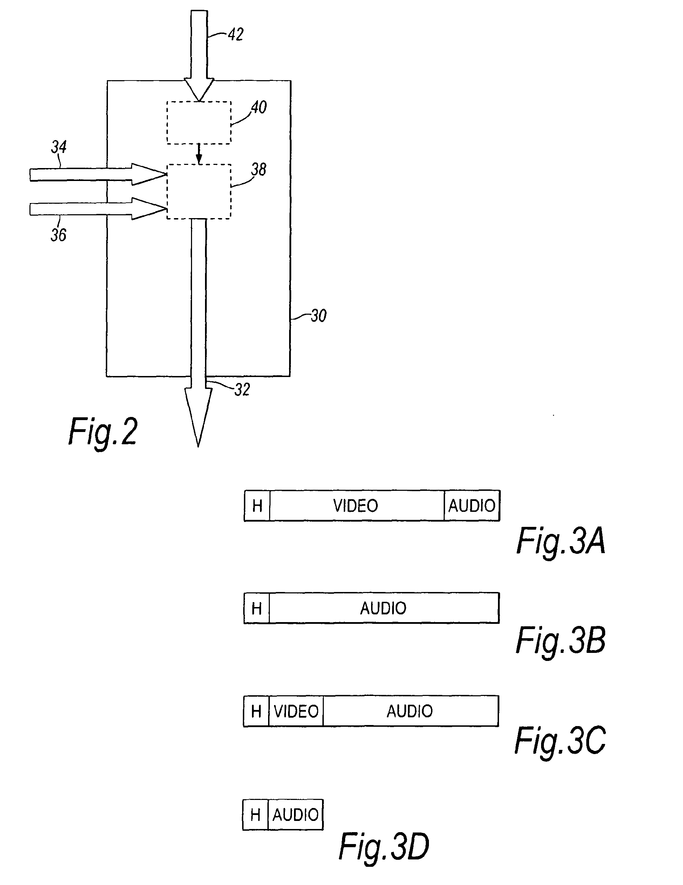

The content server 30 is shown in more detail in Figure 2.

In this embodiment a communication session is established between the terminal 1 and the telecommunications network, during which the content server 30 provides video and audio content, although of course it should be appreciated that other types of content may be provided, such as gaming and still pictures (photographs), The content server 30 receives video content via link 34 and audio content via link 36. The video and audio content may be provided by a third party. The content server 30 includes a variable bit rate (VBR) encoder 38. The encoder 38 receives the video and audio content via links 34,36 and encodes them in a form suitable for transmission via the link 32. The links 34,36 may be to a "live" feed of video and audio, or may be links to a store of video and audio content. Encoder 38 is operable to adjust the output content, transmitted via link 32, for a particular device in dependence upon the requirements of the receiving device. The requirements of a receiving device are transmitted to a requirements analyser 40 of the content server via a link 42 from the telecommunications network 3 or internet 19.

The encoder 38 is operable to generate streaming video and audio content. This content data is sent in a continuous stream and is reproduced by the terminal 1 as it arrives. For example, streaming videos in a sequence of images that is typically sent in compressed form, which is received and decompressed by the mobile terminal 1 and reproduced on arrival. Streamed audio and video content is produced in real time.

The video and audio content provided to the encoder 38 via the links 34,36 may be of high definition TV (HDTV) quality and compact disc (CD) quality. Generally, to transmit the video and audio content to a receiving terminal at this quality would consume an unacceptably large amount of the capacity of the telecommunications network 3. For example, typically television (video and audio) content for reproduction on a mobile terminal will be transmitted on a typical bearer of 128 kb/s, Of this 128 kb, in a conventional arrangement, typically 90 kb is used to transmit video content data, 24kb is used to transmit audio content data and 14kb is used for packetisation and to generate headers etc. Such a distribution of data is shown in Figure 3A, The packetisation and header portion is shown as "H" in the figure.

These bit rates are given only as an example. Alternatively, the television (video and audio) content may be transmitted on any bearer.

In accordance with an important feature of this embodiment, the content server 30 receives (for example) from the terminal 1 via link 42 and the requirements analyser 40 an indication of a quality of the received content required by the terminal 1 (or the user thereof). Such a "quality"' of the content may be whether or not video content is required, whether or not audio content, is required, or whether or not some other form of content is required (i.e. the type of content). The quality (i.e. the number of bits per second) with which one or more of the content types is transmitted may also be indicated. As is well know, generally, the more bits per second that are used to transmit content, the more faithfully that content can be reproduced.

For example, if the terminal I provides an indication to the requirements analyser 40 via the link 42 that video content is not required at all, the requirements analyser 40 will provide an appropriate instruction to the encoder 38, to encode the content in a particular manner. The content transmitted to the terminal 1 via the link 32 is transmitted on a typical bearer of 128kbps having a portion of 14kbps, for example for packetisation and headers etc., as in Figure 3A. However, the remaining 114kb is used to transmit audio content. No video content is transmitted.

The audio content received at the device 1 in accordance with the Figure 3B arrangement will be of much higher quality than that received by the Figure 3A arrangement, provided the audio content was encoded at a higher rate The Figure 3B arrangement might be preferred when the user of the terminal 1 is not in a position to view video content - for example, because the user is performing an activity that does not allow him to the display of the terminal 1,

Figure 3C shows an alternative where 14 kbps ("H") are used for packetisation and to generate headers etc, as before. However, in the Figure 3C arrangement only 24k.bps are used to transmit video data, whereas 90kbps are used to transmit audio content- The ratio of the number of kbps transmitting the video and audio content in Figure 3C is the reverse of that used to transmit the video and audio content in Figure 3A. Such an arrangement provides the user of terminal I with basic video but of significantly lower quality, or that is reproduced at a significantly lower frame, rate (for example, the video content could be reproduced as a series of linked still pictures - such as a slide show). However, the audio content will be reproducible at higher quality

Figure 3D shows another arrangement for transmitting content to the terminal 1. As before, a 14kbps portion "HT is used for packetisation and for headers etc. Only 24kbps is used to transmit contest, this being entirely audio content. No video content is transmitted. In the Figure 3D arrangement only 38kbps is required to transmit the content to the mobile terminal 1. This saves telecommunications network 3 resources. Such a form of content transmission may be appropriate when the user of the terminal 1 wishes to only receive basic quality audio signals - for example, when the reproduced content is speech (and not music) and no video. A telecommunications network 3 may be configured to apply a reduced charge to the user of terminal 1 in response to the lower use of network resources in the Figure 3D arrangement.

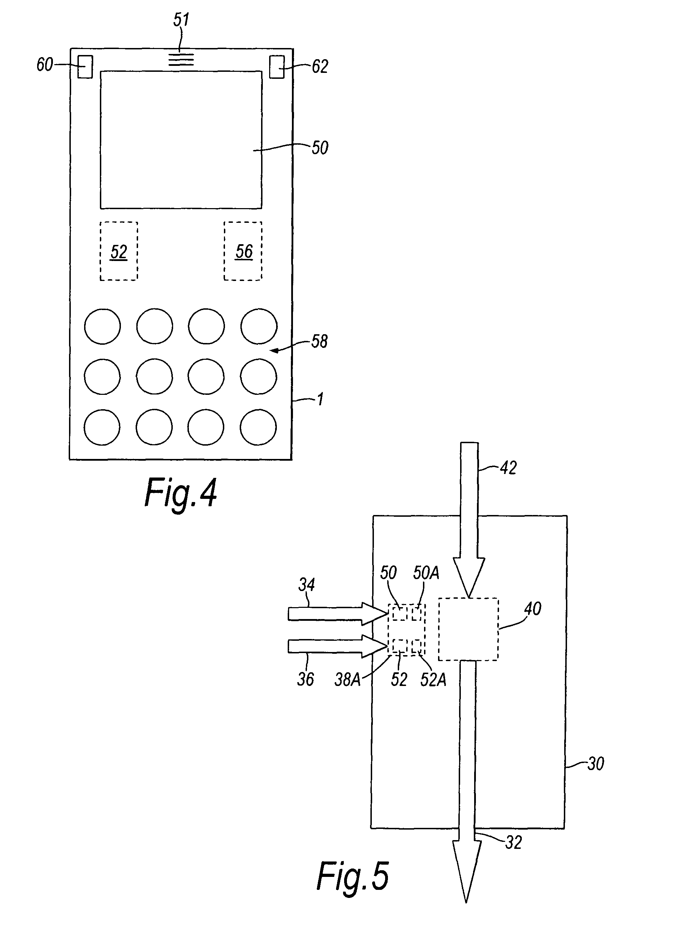

Figure 4 shows the mobile terminal 1 in more detail. The mobile terminal 1 comprises a display 50 that is capable of rendering video content and a loudspeaker 51 capable of rendering audio content. The content is received by the telecommunications network 3 from the content server 30 via link 32, and is transmitted to the mobile terminal 1 via the SGSN 9, RAN 7 and node B 5, and thence wirelessly to the terminal 1, This wireless communication may be by any suitable bearer, such as a GSM or UMTS bearer. When the content data is received, the contest data is decoded or transcoded by decodere/transcoder 52 and rendered by renderer 56 in order to allow the video content data to be reproduced on display 50. Similar conventional processing is performed by the mobile terminal 1 to reproduce other types of content such as audio content.

As indicated above, it is a feature of this embodiment that the terminal 1 is operable to transmit to the content server 30 an indication of a quality of the received content required by the terminal 1. This indication may be generated automatically by the terminal 1 or may be generated by the user of the terminal 1, for example using the user interface 58 (comprising pushbuttons in this example). The quality of the content required by the terminal is dependent on the state of the terminal, for example the operating state, environmental state or physical state.

In certain embodiments of the invention the device includes sensors to detect the environment in which it is located (environmental state). Such devices may include, for example, proximity sensors to detect when the device is in close proximity to other objects or photometric sensors to detect the light conditions in which the device is located. Information provided by the sensors can be used to determine the form of the content required by the device at that time. To provide the indication automatically, the mobile terminal 1 may be provided with a photometric sensor 60 which detects the light level and generates an electrical signal in response to this light level. This signal is processed by the processor mobile terminal 1 to determine whether the light level is indicative, for example, of the terminal 1 being in an environment where the display 50 is unlikely to be viewed - such as, when the mobile terminal is in the user's pocket or bag. If such a determination is made, the processor of the terminal 1 generates a message (or flag) indicating that video content is no longer required. This message (or flag) is transmitted wirelessly in the uplink (back channel) to the node B 5, and from there to the telecommunications network 3 via the RAN 7 and the SGSN 9. The telecommunications network 3 then transmits this signal to the content server 30 via the link 42. The requirements analyser 40 of the content server analyses this signal and instructs the encoder 38 to stop transmitting video content. The content subsequently transmitted to the mobile terminal .1 may have the form as shown in Figure 3D. This will save a significant amount of network resources. Alternatively, the content could have a form as shown in Figure 3B. Content transmitted in this form will not save network resources but will provide the user of the terminal 1 with-higher quality audio content and save battery power if no video compression or rendering is being performed. The number of bytes used to transmit the audio content may be selected in accordance with user preferences, or may be selected by the network.

Additionally, or alternatively, to the photometric sensor 60, the mobile terminal 1 may be provided with a proximity sensor 62 which detects when the sensor 62 is close to the user and generates a signal indicative thereof. In dependence upon the detected proximity to the user, processor of the mobile terminal 1 may generate a message (or flag) that is sent in the uplink/back channel to the content server 30 to adjust the form of the content transmuted to the terminal 1. For example, if the sensors detect that device is enclosed on all sides and in the dark, it may be determined that the device is in the user's pocket and so the video data stream to the device may be deactivated.

Such sensors may make monitor the environmental conditions periodically or detect a change in the environmental conditions. As the environmental conditions change, the system can react to change the data provided to the device. For example, if the sensors detect that state of the device has changed to a location of no close proximity and light, the system could decide that the device has been removed from the user's pocket and should transmit a video data stream along with the audio data stream.

Of course, other types of sensors may also be provided in order to allow the mobile terminal 1 to intelligently and automatically generate message (or flag) in the uplink/back channel to the content server 30 to request content in a form that is determined to be most appropriate for the present conditions in which the mobile terminal 1 is being used,

In further embodiments of the invention the physical state of the terminal is taken into account when determining what data streams to provide to the terminal. The mobile terminal 1 shown in Figure 4 is of a conventional one-Piece configuration - sometimes referred to as a "candy bar" configuration. Other configurations of mobile terminal are known, often referred to as "clamshell" or "flip", where the terminal comprises two parts pivotally coupled together so that the parts are movable between an open arrangement and a closed arrangement. If the mobile terminal is of the latter configuration, the photometric sensor may be omitted, Instead, when it is detected by the processor of the mobile terminal that the terminal is in the closed arrangement, it can be determined that the screen is not in view of the user and so video content is no longer required. The processor on the terminal may generate the message (or flag) to inform the server of the change in physical state of the terminal.

As indicated above, as an alternative to, or in addition to, the automatic determination by the mobile terminal 1 of the content requirements, the user may select their content requirements or identify the operating state of the terminal. For example, during reproduction of content, the user may manually select, using the user interface 58, to switch from a content configuration of the type shown in Figure 3A, which provides good quality video, but basic quality audio, to an arrangement shown in Figures 3C where the video quality or frame rate is reduced but the audio quality is significantly enhanced, The user may select the content configuration of Figure 3A, for example, when viewing a television program where the audio content is speech based but may prefer the content configuration of Figure 3C when the television program audio content is music based. The user may select the content configuration of Figure 3B when the user does not wish to, or is unable to, view video content on the display 50. The content configuration of 3D may be selected when the user does not wish to incur the cost of receiving video content and requires only basic quality audio content

The terminal I may be pre-configured by the user with the content reproduction preferences for different types of content stored in a memory of the mobile terminal 1. On receipt of content from the content server 30., the mobile terminal 1 then determines the type of content being reproduced typically from information included in the part "H.", and then transmits an appropriate signal to the content server 30 to instruct the content server 30 to transmit the content in a form desired for that content type by the user of terminal 1.

In accordance with an important feature of the embodiment, a quality of the received content required by the terminal 1 is transmitted to the t.el.econxi:nnnicz>tions network 3 during a communication session, and the content server, in response to receipt of that indication, adjusts the content transmitted thereafter accordingly during that communication session.

The embodiment is particularly useful when the content transmitted by the content server is tailored for a particular terminal (by appropriate operation of the encoder 38). That is, the content transmitted by the content server 30 is a one-to-one transmission. The embodiment can also be used where content is multicast to several terminals. The configuration of the content (i.e. the quality of the various content parts) may be selected by one or more of the receiving devices by sending an appropriate indication to the content server 30. The content may be transmitted by Multimedia Broadcast Multicast Service (MBMS), as defined by 3GPP.

Many of the embodiments discussed above include a processor in the terminal which indicates to the server the specific required data streams, for example audio only or a specific bitrate of audio and/or video. However, in further embodiments, the decision of what content to transmit to the terminal is made at the server. In such cases, the terminal will indicate the state of the device, for example clamshell closed or terminal located in dark and close proximity on all sides, and allow the server to determine what type of data should be provided to the terminal for its current state. Such embodiments remove the requirement for the device to make decisions about what content it requires. In such embodiments the indication by the device of the quality of the content that the device requires is, in fact, an indication of the current state of the device. From this information, the server then determines the quality of the content that it wil.1 transmit to the device.

The content server 30A according to a second embodiment of the invention is shown in more detail in Figure 5.

In this embodiment a communication session is established between the terminal 1 and the telecommunications network as in the first embodiment. The content server 30 receives (or has previously received) video content via link 34 and audio content via link 36. The video and audio content may be provided by a third party. The content server 30 includes an encoder 38A. The encoder 38A receives the video and audio content via links 34,36 and encodes them in a form suitable for transmission over the telecommunications network. The encoded video content is stored in store 50 and the encoded audio content is stored in store 52. Optionally, the same content may be encoded and stored in multiple forms. For example, high quality encoded video and audio content could be stored in stores 50 and 52 and lower quality encoded content could be stored in stores 50A and 52A.

The requirements of a receiving device are transmitted to a requirements analyser 40 of the content server via a link 42 from the telecommunications network 3 or internet 19. The requirements analyser 40 selects encoded content data from the appropriate store 5(),50A,52,52A in dependence upon the received requirements from link 42.

The user of the terminal may manually select the content qualities - for example high quality video and basic audio, (from stores 50,52A), high quality audio only (from store 52), basic video and basic audio (from stores 50A,52A), etc. The content qualities may also be selected automatically by a photosensor 60 and/or proximity sensor 62 or the like, in a similar manner to the first embodiment. The content data from the selected stores is sent in a continuous stream and is reproduced by the terminal as it arrives.

In further embodiments of the invention, the server takes into account the amount of available bandwidth and the content requirements of the terminal. In the situation where the terminal is operating in a state in which both video and audio are required, if the combined audio and video bitrate is above the capacity provided by the current bearer, the bitrates of the audio and video streams are reduced in proportion to remain within the available capacity of the bearer. Alternatively, if, for example, only audio is required, and the audio bitrate is below the capacity of the bearer, the server may release some of the unused capacity.

Although the invention has been described where the terminal that receives the content, and that generates the indication of the required quality of the received content required, is a mobile device, such as a GSM or UNITS mobile or cellular telecommunications terminal, the invention is also applicable to other types of receiver devices that may be coupled to a network by a fixed (cable) connection or a wireless connection. For example, the receiving device could be a computer, IPTV receiver or other uni-cast/strcaming receiver. Any of these receivers may advantageously be configured to detect when the video reproduction component (display) is deactivated or is not being used, and this can be communicated to the content server in order to adapt the content generated by the encoder 38 so that video content is thereafter no longer transmitted. With such receivers, the user may also manually select the quality of different content parts of the content in the manner described above.

In the first embodiment a Variable Bit Rate (VBR) encoder is used. However, other types of encoder may be used alternatively or additionally - for example a Constant Bit Rate (CBR) encoder.

It will be clear to those skived in the art that the content which is transmitted to a particular terminal is specific to the state of that terminal at the time at which the content is transmitted. Therefore, two identical terminals which request the same content from the same server may receive different content streams if they are in different states.

## Claims

1. A telecommunications system including a server for distributing content and a device for receiving said content during a communication session and for reproducing said content, wherein the device is operable during said communication session to transmit to said server an indication of a quality of the received content required by the device.

2. The system o:f claim 1, wherein the required quality is monitored continuously during the communication session.

3. The system of claim 1 or 2, wherein the device is operable to transmit said indication at any time during the communication session.

4. The system of claim 1,2 or 3, wherein the content comprises a plurality of content types, such as a plurality of data streams.

5. The system of claim 4, wherein said quality is the quality of one of said content types.

6. The system of claim 4 or 5, wherein said content types include, respectively, video and audio content.

7. The system of claims 4,5 or 6, the quality is the quality of a plurality of said content types,

8. The system of claim 4,5 or 6, wherein the quality is the relative quality of a plurality of said content types.

9. The method of any one of claims 1 to 8, wherein the server is operable to encode content received from a content source and to store that encoded content, wherein the server is operable to select the encoded content for transmission to the device in dependence upon said indication of quality,

10. The method of claim 9, wherein said encoded content includes encoded video content and encoded audio content, and said server is operable to select either said encoded video content or audio content.

11. The system of any one of claims 1 to 10, wherein said quality is selected by a user of the device.

12. The system of claim 11, wherein said quality is selected by the user operating a user interface of the device.

13. The system of any one of claims, 1 to 12, wherein said quality is selected by the device.

14. The system of claim 13, wherein said quality is selected automatically in response to a stimulus.

15. The system of claim 14, wherein said stimulus is the detected proximity of the device to a user.

16. The system of claim 14, wherein said stimulus is the detected light level at the device.

17. The system of claim 14, wherein the stimulus is user manipulation of the device to obscure a display of the device.

18. The system of any one of claims 1 to 17, wherein the device is a mobile or cellular telecommunications device.

19. The system of any one of claims 1 to 18, wherein said content is communicated to the said device by a mobile or cellular telecommunications network.

20. The system of claim 18 and/or 19, wherein said telecommunications device and/or said telecommunications network operates in accordance with the GSM or UMTS Standards.

21. The system of any one of claims 1 to 20, wherein said content is transmitted by internet protocol, IP.

22. The system of claim 21, wherein the device is fixed.

23. A telecommunications device including means for receiving content from a server during a communication session, means for reproducing said content, and means operable during said communication session to transmit to said server an indication of a quality of the received content required by the device.

24. The device of claim 23, including means for monitoring the required quality continuously during the communication session.

25. The device of claim. 23 or 24, is operable to transmit said indication at any time during the communication session.

26. The device of claim 23,24 or 25, wherein the content comprises a plurality of content types, such as a plurality of streams.

27. The device of claim 26, wherein said quality is the quality of one of said content types.

28. The device of claim 26 or 27, wherein said content types include respectively, video and audio content.

29. The device of claims 26,27 or 28, wherein the quality is the quality of a plurality of said content types.

30. The device of claims 26,27 or 28, wherein the quality is the relative quality of a plurality of said content types.

31. The device of any one of claims 23 to 30, including a user interface adapted to enable the quality to be selected.

32. The device of any one of claims 23 to 31, including means for automatically selecting said quality.

33. The device of claim 32, wherein said quality is selected in response to a stimulus.

34. The device of claim 33, wherein said stimulus is the detected proximity of the device to a user.

35. The device of claim 33, wherein said stimulus is the detected light level at the device.

36. The device of claim 33, wherein the stimulus is user manipulation of the device to obscure a display of the device.

37. The device of any one of claims 23 to 36, wherein the device is a mobile or cellular telecommunications device.

38. The device of any one of claims 23 to 37, operable to receive said content via a mobile or cellular telecommunications network.

39. The device of claim 37 or 38, wherein said device operates in accordance with the GS.M. or UMTS Standards.

40. The device of any one of claims 23 to 36, wherein said content is received by internet protocol, IP.

41. The device of claim 34, wherein the device is fixed.

42. A server for distributing content to a device during a communication session for reproduction by said device during the communication session, wherein the server is operable during said communication session to receive an indication of a quality of the content required by the device and to adjust said quality of said content distributed to the device, during the communication session in response to said indication.

43. The server of claim 42 operable to receive said indication at any time during the communication session.

44. The server of claim 42 or 43, wherein the content comprises a plurality of content types, such as a plurality of streams.

45. The server of claim 44, wherein said quality is the quality of one of said content types.

46. The server of claim 44 or 45, wherein said content types include, respectively, video and audio content.

47. The server of any one of claims 42 to 46, wherein the server is operable to adjust the quality of the distributed content by adjusting the manner in which the content is encoded prior to transmission to the device.

48. The server of any one of claims 42 to 46, wherein the server is operable to adjust the quality of the distributed content by selecting particular pre-encoded content for transmission to the device.

49. The server of any one of claims 44 to 48, wherein said content is communicated to the said device by a mobile or cellular telecommunications network.

50. The server of claim 49, wherein said telecommunications network operates in accordance with the GSM or UMTS Standards.

51. The server of any one of claims 44 to 50, wherein said content is transmitted by internet protocol, IP,

52. A method of distributing content from a server to a device for consumption of that content by the device during a communication session with the server, wherein during said communication session the device transmits to said server an indication of a quality of the received content required by the device, and wherein the server adjusts said quality of said content distributed to the device during the communication session response to said indication.

53. The method of claim 52, wherein the required quality is monitored continuously during the communication session.

54. The method of claim 52 or 53, wherein the device transmits said indication at any time during the communication session.

55. The method of claim 52,53 or 54, wherein the content comprises a plurality of content types, such as a plurality of streams.

56. The method of claim 55, wherein said quality is the quality of one of said content types.

57. The method of claim 55 or 56, wherein said content types include, respectively, video and audio content.

58. The method of any one of claims 52 to 57, wherein the server adjusts the quality of the distributed content by adjusting the manner in which the content is encoded prior to transmission to the device.

59. The method of any one of claims 52 to 57, wherein the server adjusts the quality of the distributed content by selecting particular pre-encoded content for transmission to the device.

60. The method of any one of claims 52 to 59, wherein said quality is selected by a user of the device.

61. The method of claim 60, wherein said quality is selected by the user operating a user interface of the device.

62. The method of any one of claims 52 to 61, wherein said quality is selected by the device.

63. The method of claim 62, wherein said quality is selected automatically in response to a stimulus.

64. The method of claim 63, wherein said stimulus is the detected proximity of the device to a user.

65. The method of claim 63, wherein said stimulus is the detected light at the device.

66. The method of claim 63, wherein the stimulus is user manipulation of the device to obscure a display of the device.

67. The method of any one of claims 52 to 66, wherein the device is a mobile or cellular telecommunications device.

68. The method of any one of claims 52 to 67, wherein said content is communicated to the said device by a mobile or cellular telecommunications network.

69. The method of claim 67 and/or 68, wherein said telecommunications device and/or said telecommunications network operates in accordance with the GSM or UMTS Standards.

70. The method of any one of claims 52 to 69, wherein said content is transmitted by internet protocol, IP,

71. The method of claim 70, wherein the device is fixed.

72. A telecommunications system including a server for distributing content and a device for receiving the content, substantially as hereinbefore described with reference to and/or substantially as illustrated in any one of or any combination of the accompanying drawings.

73. A telecommunications device substantially as hereinbefore described with reference to and/or substantially as illustrated in any one of or any combination of the accompanying drawings.

74. A server for distributing content to a device, substantially as hereinbefore described with reference to and/or substantially as illustrated in any one of or any combination of the accompanying drawings.

75. A method of distributing content from a server to a device, substantially as hereinbefore described with reference to and/or substantially as illustrated in any one of or any combination of the accompanying drawings.

76. The system of any of claims 1 to 22 wherein the quality of the received content required by the device is dependent on the state of the device.

77. The system of any of claims 1 to 22 or 76 wherein the indication of the quality of the received content required by the device transmitted to the server is an indication of the state of the device.

78. The system of claim 76 or 77 wherein the state of the device is the operating state, the physical state or the environmental state of the device,

79. The system of any of claims 9 to 22 or 76 to 78 wherein the server is operable to select the encoded content for transmission to the device in dependence on the bandwidth available for transmitting content to the device.

80. The device of any of claims 23 to 41 wherein the quality of the received content required by the device is dependent on the state of the device.

81. The device of any of claims 23 to 41 or 80 wherein the indication of the quality of the received content required by the device transmitted to the server is an indication of the state of the device,

82. The device of claim 80 or 81 wherein the state of the device is the operating state, the physical state or the environmental state of the device.

83. The server of any of claims 42 to 51 wherein the quality of the received content required by the device is dependent on the state of the device.

84. The server of any of claims 42 to 51 or 83 wherein the indication of the quality of the received content required by the device transmitted to the server is an indication of the state of the device.

85. The server of claim 83 or 84 wherein the state of the device is the operating state, the physical state or the environmental state of the device,

86. The server of any of claims 42 to 51 or 83 to 85 wherein the server is operable to select the encoded content for transmission to the device in dependence on the bai-idwidth available for transmitting content to the device.

87. The method of any of claims 52 to 71 wherein the quality of the received content required by the device is dependent on the state of the device.

88. The method of any of claims 52 to 71 or 87 wherein the indication of the quality of the received content required by the device transmitted to the server is an indication of the state of the device.

89. The method of claim 87 or 88 wherein the state of the device is the operating state, the physical state or the environmental state of the device.

90. The method of any of claims 52 to 71 or 87 to 89 wherein the server adjusts the quality of the content to the device during the communication session in dependence on the bandwidth available for transmitting content to the device.
